# EUROPÄISCHE PATENTSCHRIFT

(11) **EP 3 626 950 B1**
(45) Veröffentlichungstag und Bekanntmachung des Hinweises auf die Patenterteilung: **16.03.2022**
(21) Anmeldenummer: 18465574.4
(22) Anmeldetag: 18.09.2018
(51) Int. Cl.: F02M 26/67, F02M 26/68, F02D 9/04, F16K 1/44, F16K 11/04, F16K 25/00, F02M 26/69

(54) **VENTIL SOWIE VERFAHREN ZUM HERSTELLEN EINES VENTILS**
VALVE AND METHOD FOR PRODUCING A VALVE
SOUPAPE AINSI QUE PROCÉDÉ DE FABRICATION D'UNE SOUPAPE

(43) Veröffentlichungstag der Anmeldung: 25.03.2020
(73) Patentinhaber: Vitesco Technologies GmbH, 93055 Regensburg (DE)
(72) Erfinder: Petca, Eduard Cornel, 300693 Timisoara (RO)
(74) Vertreter: Vitesco Technologies

(56) Entgegenhaltungen:
- EP-A1- 1 798 456
- WO-A1-91/02914
- WO-A1-2014/072979
- WO-A1-2018/140998
- BE-A- 422 673
- DE-A1-102014 215 973
- US-A- 2 163 472
- US-A- 4 215 717
- US-A- 4 922 957
- US-A1- 2009 267 014
- US-A1- 2017 356 440

## Beschreibung

Die Erfindung betrifft ein Ventil gemäß Anspruch 1, insbesondere zum Öffnen und Schließen von Abgasleitungen. Ein solches Ventil weist ein Gehäuse und einen darin angeordneten Stößel auf, der mit einem Antrieb koppelbar ist und ausgebildet ist mittels des Antriebs entlang einer Längsachse des Stößels bewegt zu werden. Im Gehäuse ist ein Ventilsitz angeordnet, der einen Ventilauslass aufweist, der mittels eines am Stößel angeordneten Ventilkörpers abdichtend geschlossen bzw. freigegeben werden kann. Die Erfindung betrifft auch ein Verfahren zum Herstellen eines Ventils gemäß Anspruch 5.

Solche Ventile werden typischerweise zum Öffnen und Verschließen von Abgasleitungen in Kraftfahrzeugen eingesetzt und sind aus dem Stand der Technik bekannt. Wichtig für die Funktion solcher Ventile ist die Dichtheit, mit der das Ventil die Leitung verschließt. Gerade bei Gasen ist das Erreichen einer geringen Leckrate mit hohem Aufwand verbunden. Beispielsweise ist entscheidend, die Position des Ventilkörpers zu bestimmen, um so das Öffnen und Schließen des Ventils regeln zu können. Der Antrieb des Stößels wird typischerweise von einem Elektromotor und einem Getriebe gebildet. Das Getriebe dient dazu, die Drehbewegung des Elektromotors in eine translatorische Bewegung umzuwandeln, damit der mit dem Getriebe verbundene Stößel den Ventilkörper linear bewegen kann.

Die DE 10 2014 215 973 A1 bezieht sich auf einen Gasinjektor mit einem elastischem Metalldichtelement und einem Dichtsitz mit einem ersten und zweiten Abdichtbereich.

Die WO 91/02914 A1 bezieht sich auf Verschlüsse zur Verhinderung des Gas- oder Flüssigkeitsstroms, insbesondere aber nicht ausschließlich auf Absperrventile und Wellendichtungen.

Die BE 422 673 A betrifft ein Gasventil.

Die EP 1798456 A1 betrifft ein Absperrventil, das für den Einsatz in einem gasbefeuerten Kessel, einer Gasverbrennungsvorrichtung oder dergleichen geeignet ist.

Eine Aufgabe, die der Erfindung zugrunde liegt, ist es, ein Konzept für ein Ventil anzugeben, welches eine besonders hohe Dichtheit des Ventils im Betrieb ermöglicht. Das Ventil weist einen im Gehäuse angeordneten Ventilsitz mit einem Ventilauslass auf. Das Ventil weist einen Ventilkörper auf, der fest mit dem Stößel verbunden ist, wobei an dem Ventilkörper ein Abdichtelement angeordnet ist. Der Ventilkörper und das Abdichtelement sind durch eine Bewegung des Stößels zwischen einer Offenstellung, in der der Ventilauslass freigegeben ist, und einer Schließstellung betätigbar bzw. bewegbar. Der Ventilkörper und das Abdichtelement sind so ausgebildet, dass in der Schließstellung der Ventilkörper und das Abdichtelement jeweils an dem Ventilsitz zum Verschließen des Ventilauslasses abdichtend anliegen. Der Ventilkörper weist einen umlaufenden Vorsprung auf, der in Schließstellung an einer zur Längsachse normal verlaufenden Gegenkontaktfläche des Ventilsitzes aufliegt zum Abdichten des Ventilauslasses, wobei der umlaufende Vorsprung auf der der Gegenkontaktfläche zugewandten Seite abgerundet ausgebildet ist. Das Abdichtelement ist eine elastische Scheibe, die als eine metallische Scheibe oder Blechscheibe ausgebildet ist. Die elastische Scheibe ist in Schließstellung elastisch in einer Richtung weg vom Ventilsitz verbogen und liegt an dem Ventilsitz an. Die elastische Scheibe ist ringförmig ausgebildet. Die elastische Scheibe ist auf einer dem Ventilsitz abgewandten Seite des Ventilkörpers auf einen umlaufenden Montagevorsprung des Ventilkörpers aufgepresst und an diesem unverlierbar formschlüssig angeordnet.

Das beschriebene Ventil zeichnet sich dadurch aus, dass in Schließstellung der Ventilauslass sowohl durch den Ventilkörper selbst als auch das Abdichtelement, insb. durch das Abdichtelement zusammen mit dem Ventilkörper, abgedichtet ist. Der Ventilkörper und somit das Abdichtelement sind aufgrund der festen Kopplung mit dem Stößel mittels des Stößels bewegbar und so ausgebildet, dass in der Schließstellung der Ventilauslass doppelt geschlossen werden kann. Insbesondere liegen der Ventilkörper selbst und das Abdichtelement in zwei Bereichen an dem Ventilsitz an und dichten somit an zwei Stellen ab. Dadurch sind an einem Ventilsitz mittels eines Ventilkörpers und dem Abdichtelement zwei Ventildichtungen bzw. zwei Ventilfunktionen ermöglicht. Dies ermöglicht eine besonders effektive Dichtheit des Ventils, da für einen Ventilauslass eine redundante Dichtung ermöglicht ist und im Falle einer Leckage am Ventilkörper immer noch die Dichtheit über das Abdichtelement erzielt werden kann. Mit anderen Worten sind an einem Ventilsitz zwei Dichtbereiche für den Ventilauslass ausgebildet. Es wird zudem zu einer kostengünstigen Herstellung eines solchen Ventils beigetragen. Der Ventilkörper weist einen umlaufenden Vorsprung auf, der in Schließstellung an einer zur Längsachse normal verlaufenden Gegenkontaktfläche des Ventilsitzes aufliegt zum Abdichten des Ventilauslasses. Im Vergleich zu konisch ausgebildeten Ventilsitzen bzw. konisch verlaufenden Gegenkontaktflächen von Ventilsitzen werden geringere Anforderungen an den Stößel, den Ventilsitz und den Ventilkörper mit Hinblick auf Exzentrizitätstoleranzen gestellt. Dies liegt daran, dass mittels des Abdichtelements noch eine weitere Dichtung ermöglicht ist. Dies reduziert die Herstellungskosten. Der umlaufende Vorsprung ist auf der der Gegenkontaktfläche zugewandten Seite abgerundet ausgebildet.

Das beschriebene Ventil eignet sich insbesondere für Linearventile, bei denen der Stößel entlang einer Richtung, insbesondere seiner Längsachse, linear bewegt wird. Weiterhin kann das Ventil auch einen weiteren Ventilsitz mit einem weiteren Ventilauslass aufweisen (ein durch die Ansprüche nicht beschriebenes Doppelsitzventil ), der gleichzeitig zum ersten Ventilauslass durch die Stößelbewegung mittels einer entsprechenden Ventilkörpervorrichtung verschlossen oder freigegeben werden kann.

Beispielsweise ist das Ventil in einem Abgasrückführsystem eines Kraftfahrzeugs einsetzbar, um die Abgasleitung des Kraftfahrzeugs zu öffnen und zu schließen. Beispielsweise kann ein Abgasrückführsystem eines Kraftfahrzeugs das Ventil aufweisen.

Als Ventilsitz wird bevorzugt ein einstückiges Bauteil verstanden, welches in einer Ausnehmung im Gehäuse angeordnet ist, etwa eingepresst oder leicht verschiebbar, und den Dichtkontakt mit dem Ventilkörper bzw. dem Abdichtelement herstellt. Über den Ventilauslass kann ein Fluid, etwa Abgas, ausströmen. Der Ventilauslass kann sich axial über einen Bereich bzgl. der Längsachse erstrecken. Der Ventilauslass kann stufig oder konisch ausgebildet sein. Der Ventilsitz kann beispielsweise zylinderförmig ausgebildet sein. Bevorzugt kann der Ventilsitz rotationssymmetrisch ausgebildet sein.

Das Abdichtelement ist separat (erfindungsgemäß) zu dem Ventilkörper, der auch als Schließkörper bezeichnet werden kann, oder alternativ einstückig (nicht erfindungsgemäß) mit dem Ventilkörper ausgebildet.

Das Abdichtelement ist als eine elastische Scheibe, d. h. als eine metallische Scheibe oder Blechscheibe, ausgebildet. Dadurch können Toleranzen, etwa Fertigungs- oder Montagetoleranzen, kompensiert werden. Zudem wird ermöglicht, dass die elastische Scheibe in der Schließstellung unter mechanischer Spannung an dem Ventilsitz anliegt. Dies trägt zu einer sicheren Abdichtung des Ventilauslasses bei.

Weiterhin ist die elastische Scheibe in Schließstellung elastisch in einer Richtung weg vom Ventilsitz verbogen und liegt an dem Ventilsitz an. Dies ermöglicht die oben genannten Vorteile und Funktionen. Unter anderem wird ermöglicht, dass bei einem Schließvorgang des Ventils zunächst das Abdichtelement den Ventilsitz kontaktiert und an diesem anliegt. Anschließend wird bei einem weiteren Schließen der Ventilkörper entgegen der Federkraft so an den Ventilsitz gedrückt, dass das Abdichtelement elastisch verbogen wird und zum Schließen des Ventilauslasses am Ventilsitz unter Spannung stehend anliegt.

Weiter ist die elastische Scheibe ringförmig ausgebildet. Weiterhin ist die Scheibe auf einer dem Ventilsitz abgewandten Seite des Ventilkörpers auf einen umlaufenden Montagevorsprung des Ventilkörpers aufgepresst und ist an diesem unverlierbar formschlüssig angeordnet. Dadurch ist die Scheibe sicher am Ventilkörper festgelegt, wobei diese insbesondere in axialer Richtung bezüglich der Längsachse relativ zu dem Ventilkörper unbeweglich ist. Beispielswiese kann die Scheibe an dem Montagevorsprung verrasten. Die Scheibe kann beispielsweise gegen einen mechanischen Anschlag des Ventilkörpers geschoben werden, wobei sie an dieser Position mit dem Montagevorsprung entsprechend verrasten kann. Beispielsweise kann die Scheibe auf den Montagevorsprung unter Ausbildung einer Presspassung aufgeschoben sein und in eine entsprechende, an die Scheibe angepasste Nut eingreifen .

Der Ventilkörper und das Abdichtelement können beispielsweise tellerartig und um den Stößel herum ausgebildet sein.

Die tellerartige Ausgestaltung ermöglicht zudem eine einfache und kostengünstige Herstellung. Weiterhin kann damit auf einfache Weise eine doppelte Abdichtung des Ventilauslasses erreicht werden. Mit anderen Worten handelt es sich bei einem solchen Ventil um ein Tellerventil.

Gemäß einer Ausführungsform ist der Ventilkörper mit dem Stößel verschweißt. Dies ermöglicht eine sichere und langzeitstabile Verbindung. Zudem ist eine einfache und kostengünstige Herstellung ermöglicht. Alternativ oder zusätzlich kann der Ventilkörper auf den Stößel unter Ausbildung einer Pressung aufgeschoben sein (Presspassung).

Gemäß einer Ausführungsform weist der Ventilkörper einen ersten Kontaktbereich auf, der in der Schließstellung an dem Ventilsitz anliegt zur Ausbildung einer ersten Dichtung. Das Abdichtelement weist einen zweiten Kontaktbereich auf, der in der Schließstellung an dem Ventilsitz anliegt zur Ausbildung einer zweiten Dichtung. Dadurch ist in der Schließstellung der Ventilauslass sowohl durch den Ventilkörper als auch das Abdichtelement abdichtbar. Es sind somit zwei separate Kontaktbereiche ausgebildet, die jeweils mit einem entsprechenden Gegenkontaktbereich des Ventilsitzes in Schließstellung in Kontakt treten. Dies ermöglicht die oben genannten Vorteile und Funktionen.

Die Kontaktbereiche, auch Kontaktabschnitte genannt, können beispielsweise um die Längsachse des Stößels herum umlaufend ausgebildet sein. Beispielsweise können die Kontaktbereiche ringförmig oder zylinderförmig vollständig um die Längsachse umlaufend sein. Der Ventilkörper und das Abdichtelement können sind beispielswiese rotationssymmetrisch bzgl. der Längsachse ausgebildet sein. Die beiden Kontaktbereiche können auch als Dichtflächen oder Dichtbereiche bezeichnet werden. Die Kontaktbereiche können insbesondere beabstandet zueinander ausgebildet sein. Der erste Kontaktbereich kann beispielsweise radial bzgl. der Längsachse näher am Stößel als der zweite Kontaktbereich liegen. Zusätzlich oder alternativ können die beiden Kontaktbereiche bzgl. der Längsachse axial versetzt zueinander sein. Mit anderen Worten können sind die beiden Kontaktbereiche beispielsweise axial und/oder radial zueinander beabstandet sein.

Gemäß einer Ausführungsform weist der Ventilauslass bezogen auf die Längsachse einen ersten Abschnitt mit einem ersten Durchmesser und einen daran anschließenden zweiten Abschnitt mit einem im Vergleich zum ersten Durchmesser vergrößerten zweiten Durchmesser auf. In der Schließstellung liegt der Ventilkörper am ersten Abschnitt an und verschließt den Ventilauslass. Das Abdichtelement liegt am zweiten Abschnitt an, so dass das Abdichtelement, insbesondere zusammen mit dem Ventilkörper, ebenfalls den Ventilauslass verschließt. Dies trägt zu oben erwähnten Vorteilen und Funktionen bei

Des Weiteren wird ein Verfahren zum Herstellen eines Ventils nach einem der Ansprüche 1-4 offenbart. Es umfasst die Schritte:
- Festlegen eines Abdichtelements an einem Ventilkörper des Ventils, wobei der Ventilkörper und das Abdichtelement zum Schließen bzw. Freigeben eines Ventilauslasses des Ventils ausgebildet sind,
- Festlegen des Ventilkörpers mit dem Abdichtelement an einem verschiebbaren Stößel des Ventils, und
- Einsetzen und Lagern des verschiebbaren Stößels in einem Gehäuse des Ventils, in welchem Gehäuse ein Ventilsitz zum Zusammenwirken mit dem Ventilkörper und dem Abdichtelement angeordnet ist.

Das beschriebene Verfahren ermöglicht die Herstellung eines Ventils mit den oben erwähnten Vorteilen und Funktionen. Soweit nicht anders angegeben gelten die obigen Ausführungen zu dem Ventil und Weiterbildungen dessen analog auch für das Verfahren. Beispielsweise wird in einer Ausführungsform das Abdichtelement auf einen Montagevorsprung des Ventilkörpers aufgeschoben, etwa gegen einen Anschlag, und aufgepresst. Bevorzugt verrastet das Abdichtelement am Ventilkörper bzw. dem Montagevorsprung. Beim Festlegen des Ventilkörpers am Stößel ist beispielsweise eine Presspassung vorgesehen. Beispielsweise wird der Ventilkörper an den Stößel angeschweißt.

In den Figuren zeigen:
- Figur 1: eine schematische Schnittansicht eines exemplarischen und nicht erfindungsgemäßen Ventils,
- Figur 2: eine schematische Aufsicht auf ein Ventil gemäß einem Ausführungsbeispiel der Erfindung,
- Figur 3: eine schematische Schnittansicht des Ventils gemäß Figur 2 in einer Schließstellung,
- Figur 4: eine schematische, vergrößerte Teilansicht der Figur 3, und
- Figur 5: ein schematisches Ablaufdiagramm eines Verfahrens zum Herstellen eines Ventils gemäß Figur 2.

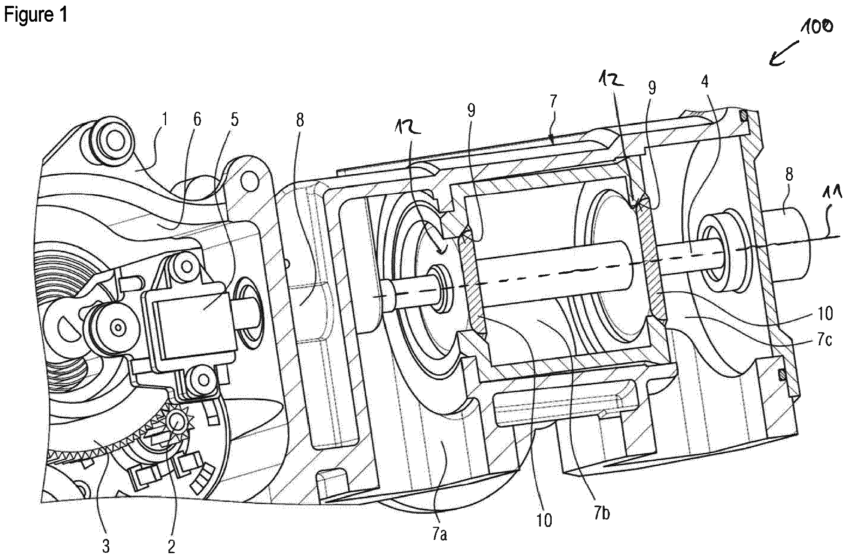

Das Ventil 100 in Figur 1 weist ein Gehäuse 1 auf, in dem ein Elektromotor 2 angeordnet ist. Mittels eines Getriebes 3 wird die Drehbewegung des Elektromotors 2 in eine lineare Bewegung eines Stößels 4, der im Gehäuse 1 gelagert ist, umgewandelt. Am Getriebe 3 ist ein Sensor 5 angeordnet, der mit einem am Stößel 4 befestigten Magneten zusammenwirkt. Der Stößel 4 erstreckt sich von einer Getriebekammer 6 bis in eine Ventilkammer 7, wobei der Stößel 4 an zwei Stellen 8 gelagert ist. Die Ventilkammer 7 besteht aus drei hintereinander liegenden Teilkammern 7a, 7b, 7c, die jeweils durch einen Ventilsitz 9 voneinander getrennt sind. Zwei Ventilkörper 10 sind so auf dem Stößel 4 fest angeordnet, dass sie bei einer linearen Bewegung des Stößels 4 entlang einer Längsachse 11 des Stößels 4 an den jeweiligen Ventilsitz 9 anliegen und einen entsprechenden Ventilauslass 12 abdichten können oder sich vom Ventilsitz 9 wegbewegen und den entsprechenden Ventilauslass 12 somit freigeben können, so dass ein Gas von einer Ventilkammer 7 in eine andere strömen kann.

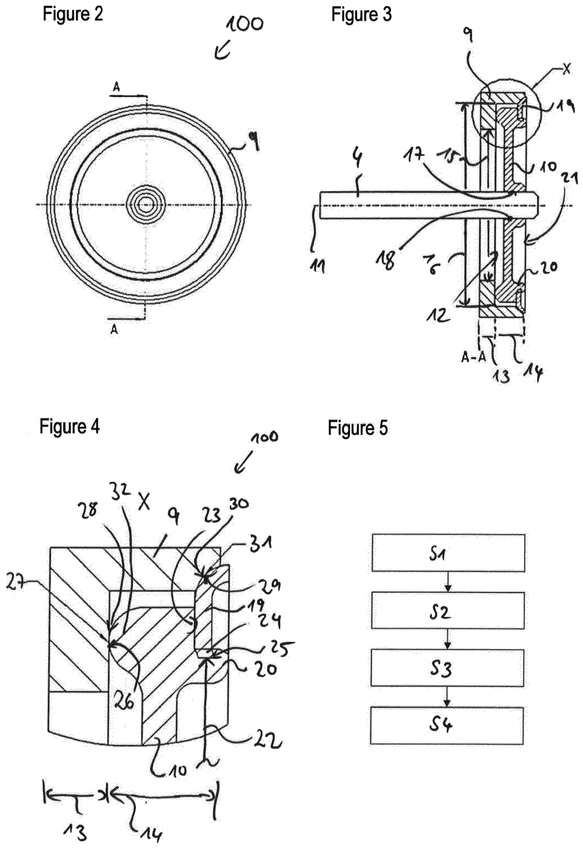

Im Folgenden wird ein Ventil 100 gemäß einem Ausführungsbeispiel der Erfindung beschrieben, welches eine verbesserte Abdichtung eines Ventilauslasses 12 aufweist. Das im Folgenden beschriebene Ventil 100 kann, muss aber nicht Merkmale der anhand von Figur 1 beschriebenen Ausgestaltung aufweisen. Es sei darauf hingewiesen, dass das Ventil 100 gemäß dem Ausführungsbeispiels alternativ zumindest teilweise auch anderweitige Ausgestaltungen haben kann, ohne dass sich Einschränkungen für die nachfolgende Beschreibung des Ausführungsbeispiels der Erfindung ergeben. Die Figuren 2 bis 4 zeigen jeweils nur relevante Bereiche des Ventils 100, wobei aus Gründen der Übersichtlichkeit auf die Darstellung von Einzelheiten und anderen Merkmalen verzichtet ist.

Figur 2 zeigt eine perspektivische Aufsicht auf das Ventil 100 gemäß dem Ausführungsbeispiel der Erfindung. Figur 3 zeigt eine Schnittansicht des Ventils 100 gemäß der in Figur 2 eingezeichneten Schnittebene A-A. Figur 4 zeigt eine vergrößerte Teilansicht der Schnittdarstellung gem. Figur 3.

Das Ventil 100 weist einen Ventilsitz 9 auf, der einen Ventilauslass 12 aufweist. Der Ventilsitz 9 ist rotationssymmetrisch und zylinderförmig ausgebildet und hat eine durchgängige Öffnung. Der Ventilauslass 12 ist zweistufig ausgebildet und weist bezogen auf die Längsachse 11 des Stößels 4 einen ersten Abschnitt 13 und einen daran anschließenden zweiten Abschnitt 14 auf. Der erste Abschnitt 13 hat einen ersten Durchmesser 15 und der zweite Abschnitt 14 hat einen zweiten Durchmesser 16, der im Vergleich zu dem ersten Durchmesser 15 größer ist. Mit anderen Worten hat der Ventilauslass 12 eine erste Ventilöffnung, die dem axialen Ende des ersten Abschnitts 13 entspricht und den ersten Durchmesser 15 aufweist, und eine zweite Ventilöffnung, die dem axialen Ende des zweiten Abschnitts 14 entspricht und den zweiten Durchmesser 15 aufweist.

An dem Stößel 4 ist ein tellerartiger Ventilkörper 10 angeordnet. Der Ventilkörper 10 ist ringförmig um die Längsachse 11 des Stößels 4 umlaufend ausgebildet und hat einen zylindrischen Abschnitt 17, mittels welchem dieser auf den Stößel 4 aufgeschoben und aufgepresst ist. Der Ventilkörper 10 ist fest mit dem Stößel 4 verschweißt. In Figur 3 ist eine Verschweißungsstelle 18 des Ventilkörpers 10 mit dem Stößel 4 exemplarisch gekennzeichnet.

Der Ventilkörper 10 weist ein Abdichtelement 19 auf, welches als eine elastische, ringförmige und metallische Scheibe ausgebildet ist. Das Abdichtelement 19 läuft ebenfalls um die Längsachse 11 um. Der Ventilköper 10 weist einen umlaufenden Montagevorsprung 20 auf, der auf einer dem Ventilsitz 9 abgewandten Seite 21 des Ventilkörpers 10 angeordnet ist. Das Abdichtelement 19 weist eine innere Öffnung 22 auf, mittels der das Abdichtelement 19 auf den Montagevorsprung 20 bis gegen einen Anschlag 23 des Ventilkörpers 10 aufgepresst ist. In dieser Position bezüglich der Längsachse 11 greift der die innere Öffnung 22 begrenzende Rand 24 des Abdichtelements 19 in eine entsprechende Nut 25 des Ventilkörpers 10 bzw. Montagevorsprungs 20 ein, so dass das Abdichtelement 19 verhakt oder verrastet ist. Dadurch ist eine axiale Sicherung gegeben und das Abdichtelement 19 unverlierbar am Ventilkörper 10 gehalten.

Durch die feste Kopplung mit dem Stößel 4 ist der Ventilkörper 10 und damit das Abdichtelement 19 linear entlang der Längsachse 11 zwischen einer Offenstellung und einer Schließstellung verstellbar. Die Betätigung des Stößels 4 kann optional federunterstützt sein.

Figuren 3 und 4 zeigen die Schließstellung des Ventils 100. Der Ventilkörper 10 weist einen ersten Kontaktbereich 26 auf, der in der Schließstellung an dem ersten Abschnitt 13 des Ventilsitzes 9 anliegt und mit einem ersten Gegenkontaktbereich 27 in Kontakt ist, wobei eine erste Dichtung 28 (auch Dichtbereich oder Dichtfläche) ausgebildet ist. Analog weist das Abdichtelement 19 einen zweiten Kontaktbereich 29 auf, der in der Schließstellung mit einem entsprechenden zweiten Gegenkontaktbereich 30 des zweiten Abschnitts 14 in Kontakt ist, d.h. an diesem abdichtend anliegt. Dabei ist eine zweite Dichtung 31 (auch Dichtbereich oder Dichtfläche) ausgebildet. Der erste Gegenkontaktbereich 27 ist als eine zur Längsachse 11 normal verlaufende Gegenkontaktfläche ausgebildet. Der erste Kontaktbereich 26 ist an einem umlaufenden Vorsprung 32 des Ventilkörpers 10 ausgebildet, der dem ersten Gegenkontaktbereich 27 zugewandt ist. Der umlaufende Vorsprung 32 ist abgerundet ausgebildet.

In der Schließstellung sind somit zwei Dichtfunktionen bewirkt. Zum einen verschließt der Ventilkörper 10 selbst durch Kontakt mit dem Ventilsitz 9 den Ventilauslass 12. Zum anderen verschließt das Abdichtelement 19 zusammen mit dem Ventilkörper 10 den Ventilauslass 12, indem das Abdichtelement 19 am Ventilsitz 9 ebenfalls anliegt. In der Schließstellung ist das Abdichtelement 19 zudem elastisch in einer Richtung weg vom Ventilsitz 9 verbogen und liegt somit unter mechanischer Spannung stehend am Ventilsitz 9 an.

Wird der Stößel 4 derart bewegt, dass der Ventilköper 10 und das Abdichtelement 19 in die Offenstellung geführt werden, so liegt weder der Ventilkörper 10 noch das Abdichtelement 19 am Ventilsitz 9 an, so dass der Ventilauslass 12 freigegeben ist.

Bei einem Schließvorgang des Ventils 100 wird der Ventilkörper 10 mit dem Abdichtelement in Richtung des Ventilsitzes 9 bewegt. Das Ventil 100 ist so ausgebildet, dass beim Schließen das Abdichtelement 19 kurz vor dem Ventilkörper 10 mit dem Ventilsitz 9 in Kontakt tritt, so dass das Abdichtelement 19 elastisch verbogen wird, bis der Ventilkörper 10 in seiner Endstellung angekommen ist.

Das Ventil 100 ermöglicht die eingangs genannten Vorteile und Funktionen.

Anhand von Figur 5 wird ein Herstellungsverfahren für das Ventil 100 beschrieben.

Gemäß einem Schritt S1 wird das Abdichtelement 19 an dem Ventilkörper 10 wie oben erläutert festgelegt. Damit bilden das Abdichtelement 19 und der Ventilkörper 10 eine Unterbaugruppe.

In einem nächsten Schritt S2 wird die Unterbaugruppe am Stößel 4 montiert, wobei der Ventilkörper 10 auf den Stößel 4 wie beschrieben aufpresst und angeschweißt.

In einem nächsten Schritt S3 wird der Stößel 4 mit der Baugruppe in das Gehäuse 1 des Ventils 100 eingesetzt.

In einem vierten Schritt S4 wir der Stößel 4 mit der Baugruppe im Gehäuse 1 gelagert.

Das Montieren des Stößels 4 im Gehäuse ist dergestalt, dass die oben beschriebene Ventilfunktionalität gegeben ist.

Die Schritte S3 und S4 können auch vertauscht sein oder im Wesentlichen gleichzeitig ablaufen.

## Patentansprüche

1. Ventil (100) zum Öffnen und Schließen von Abgasleitungen, aufweisend
- ein Gehäuse (1),
- einen im Gehäuse (1) angeordneten Stößel (4), der mit einem Antrieb (2) koppelbar ist und ausgebildet ist mittels des Antriebs (2) entlang einer Längsachse (11) des Stößels (4) bewegt zu werden,
- einen im Gehäuse (1) angeordneten Ventilsitz (9), der einen Ventilauslass (12) aufweist, und
- einen Ventilkörper (10), der fest mit dem Stößel (4) verbunden ist, wobei an dem Ventilkörper (10) ein Abdichtelement (19) angeordnet ist, so dass der Ventilkörper (10) und das Abdichtelement (19) durch eine Bewegung des Stößels (4) zwischen einer Offenstellung, in der der Ventilauslass (12) freigegeben ist, und einer Schließstellung betätigbar sind, wobei der Ventilkörper (10) und das Abdichtelement (19) so ausgebildet sind, dass in der Schließstellung der Ventilkörper (10) und das Abdichtelement (19) jeweils an dem Ventilsitz (9) zum Verschließen des Ventilauslasses (12) abdichtend anliegen,
- wobei das Abdichtelement (19) eine elastische Scheibe ist, die als eine metallische Scheibe oder Blechscheibe ausgebildet ist,
- wobei die elastische Scheibe ringförmig ausgebildet ist,
**dadurch gekennzeichnet, dass**
- der Ventilkörper (10) einen umlaufenden Vorsprung (32) aufweist, der in Schließstellung an einer zur Längsachse (11) normal verlaufenden Gegenkontaktfläche (27) des Ventilsitzes (9) aufliegt zum Abdichten des Ventilauslasses (12), wobei der umlaufende Vorsprung (32) auf der der Gegenkontaktfläche (27) zugewandten Seite abgerundet ausgebildet ist,
- die elastische Scheibe in Schließstellung elastisch in einer Richtung weg vom Ventilsitz (9) verbogen ist und an dem Ventilsitz (9) anliegt, und
- die elastische Scheibe auf einer dem Ventilsitz (9) abgewandten Seite (21) des Ventilkörpers (10) auf einen umlaufenden Montagevorsprung (20) des Ventilkörpers (10) aufgepresst und an diesem unverlierbar formschlüssig angeordnet ist.

2. Ventil (100) nach Anspruch 1, wobei der Ventilkörper (10) mit dem Stößel (4) verschweißt ist.

3. Ventil (100) nach einem der vorhergehenden Ansprüche, wobei der Ventilkörper (10) einen ersten Kontaktbereich (26) aufweist, der in der Schließstellung an dem Ventilsitz (9) anliegt zur Ausbildung einer ersten Dichtung (28), und wobei das Abdichtelement (19) einen zweiten Kontaktbereich (29) aufweist, der in der Schließstellung an dem Ventilsitz (9) anliegt zur Ausbildung einer zweiten Dichtung (31).

4. Ventil (100) nach einem der vorhergehenden Ansprüche, wobei der Ventilauslass (12) bezogen auf die Längsachse (11) einen ersten Abschnitt (13) mit einem ersten Durchmesser (15) und einen daran anschließenden zweiten Abschnitt (14) mit einem im Vergleich zum ersten Durchmesser (15) vergrößerten zweiten Durchmesser (16) aufweist, wobei in der Schließstellung
- der Ventilkörper (10) am ersten Abschnitt (13) anliegt und den Ventilauslass (12) verschließt, und
- das Abdichtelement (19) am zweiten Abschnitt (14) anliegt, so dass das Abdichtelement (19 den Ventilauslass (12) verschließt.

5. Verfahren zum Herstellen eines Ventils (100) nach einem der vorhergehenden Ansprüche, umfassend die Schritte:
- Festlegen eines Abdichtelements (19) an einem Ventilkörper (10) des Ventils (100), wobei der Ventilkörper (10) und das Abdichtelement (19) zum Schließen bzw. Freigeben eines Ventilauslasses (12) des Ventils (100) ausgebildet sind,
- Festlegen des Ventilkörpers (10) mit dem Abdichtelement (19) an einem verschiebbaren Stößel (4) des Ventils (100), und
- Einsetzen und Lagern des verschiebbaren Stößels (4) in einem Gehäuse (1) des Ventils (100), in welchem Gehäuse (1) ein Ventilsitz (9) zum Zusammenwirken mit dem Ventilkörper (10) und dem Abdichtelement (19) angeordnet ist.

## Claims

1. Valve (100) for opening and closing exhaust lines, having
- a housing (1),
- a plunger (4) which is arranged in the housing (1) and which is couplable to a drive (2) and which is configured to be moved along a longitudinal axis (11) of the plunger (4) by means of the drive (2),
- a valve seat (9) which is arranged in the housing (1) and which has a valve outlet (12), and
- a valve body (10) which is fixedly connected to the plunger (4), wherein a sealing element (19) is arranged on the valve body (10) such that, by means of a movement of the plunger (4), the valve body (10) and the sealing element (19) can be actuated between an open position, in which the valve outlet (12) is opened up, and a closed position, wherein the valve body (10) and the sealing element (19) are configured such that, in the closed position, the valve body (10) and the sealing element (19) each lie sealingly against the valve seat (9) in order to close the valve outlet (12),
- wherein the sealing element (19) is an elastic disc which is configured as a metallic disc or sheet-metal disc,
- wherein the elastic disc is of ring-shaped configuration,
**characterized in that**
- the valve body (10) has an encircling projection (32) which, in the closed position, lies against a counterpart contact surface (27), which runs normally with respect to the longitudinal axis (11), of the valve seat (9) in order to seal off the valve outlet (12), wherein the encircling projection (32) is of rounded form on the side facing toward the counterpart contact surface (27),
- the elastic disc, in the closed position, is bent elastically in a direction away from the valve seat (9) and lies against the valve seat (9), and
- the elastic disc is, on a side (21) of the valve body (10) which is averted from the valve seat (9), pressed onto an encircling assembly projection (20) of the valve body (10) and arranged in form-fitting, captive fashion thereon.

2. Valve (100) according to Claim 1, wherein the valve body (10) is welded to the plunger (4).

3. Valve (100) according to either one of the preceding claims, wherein the valve body (10) has a first contact region (26) which, in the closed position, lies against the valve seat (9) in order to form a first seal (28), and wherein the sealing element (19) has a second contact region (29) which, in the closed position, lies against the valve seat (9) in order to form a second seal (31).

4. Valve (100) according to any one of the preceding claims, wherein the valve outlet (12) has, in relation to the longitudinal axis (11), a first section (13) with a first diameter (15) and, adjoining this, a second section (14) with a second diameter (16) greater than the first diameter (15), wherein, in the closed position,
- the valve body (10) lies against the first section (13) and closes the valve outlet (12), and
- the sealing element (19) lies against the second section (14) such that the sealing element (19) closes the valve outlet (12).

5. Method for producing a valve (100) according to any one of the preceding claims, comprising the steps:
- fixing a sealing element (19) to a valve body (10) of the valve (100), wherein the valve body (10) and the sealing element (19) are configured to close and open up a valve outlet (12) of the valve (100),
- fixing the valve body (10) with the sealing element (19) to a displaceable plunger (4) of the valve (100), and
- inserting and mounting the displaceable plunger (4) in a housing (1) of the valve (100), in which housing (1) there is arranged a valve seat (9) for interacting with the valve body (10) and the sealing element (19).

## Revendications

1. Soupape (100) pour ouvrir et fermer des conduites de gaz d'échappement, présentant :
- un boîtier (1),
- un poussoir (4) agencé dans le boîtier (1), qui peut être couplé à un entraînement (2) et qui est configuré pour être déplacé au moyen de l'entraînement (2) le long d'un axe longitudinal (11) du poussoir (4),
- un siège de soupape (9) agencé dans le boîtier (1), qui présente une sortie de soupape (12), et
- un corps de soupape (10), qui est relié de manière fixe au poussoir (4), un élément d'étanchéité (19) étant agencé sur le corps de soupape (10), de telle sorte que le corps de soupape (10) et l'élément d'étanchéité (19) peuvent être actionnés par un déplacement du poussoir (4) entre une position d'ouverture, dans laquelle la sortie de soupape (12) est libérée, et une position de fermeture, le corps de soupape (10) et l'élément d'étanchéité (19) étant configurés de telle sorte que, dans la position de fermeture, le corps de soupape (10) et l'élément d'étanchéité (19) s'appliquent chacun de manière étanche contre le siège de soupape (9) pour fermer la sortie de soupape (12),
- l'élément d'étanchéité (19) étant un disque élastique, qui est configuré sous la forme d'un disque métallique ou d'un disque de tôle,
- le disque élastique étant configuré sous forme annulaire,
**caractérisée en ce que**
- le corps de soupape (10) présente une saillie périphérique (32) qui, dans la position de fermeture, repose sur une surface de contact antagoniste (27) du siège de soupape (9) s'étendant perpendiculairement à l'axe longitudinal (11) pour assurer l'étanchéité de la sortie de soupape (12), la saillie périphérique (32) étant configurée sous forme arrondie sur le côté tourné vers la surface de contact antagoniste (27),
- le disque élastique étant déformé élastiquement dans la position de fermeture dans une direction s'éloignant du siège de soupape (9) et s'appliquant contre le siège de soupape (9),
et
- le disque élastique étant pressé sur un côté (21) du corps de soupape (10) détourné du siège de soupape (9) sur une saillie de montage périphérique (20) du corps de soupape (10) et étant agencé sur celle-ci de manière imperdable par complémentarité de forme.

2. Soupape (100) selon la revendication 1, dans laquelle le corps de soupape (10) est soudé au poussoir (4) .

3. Soupape (100) selon l'une quelconque des revendications précédentes, dans laquelle le corps de soupape (10) présente une première zone de contact (26) qui, dans la position de fermeture, s'applique contre le siège de soupape (9) pour former un premier joint d'étanchéité (28), et dans laquelle l'élément d'étanchéité (19) présente une deuxième zone de contact (29) qui, dans la position de fermeture, s'applique contre le siège de soupape (9) pour former un deuxième joint d'étanchéité (31).

4. Soupape (100) selon l'une quelconque des revendications précédentes, dans laquelle la sortie de soupape (12) présente, par rapport à l'axe longitudinal (11), une première section (13) ayant un premier diamètre (15) et une deuxième section (14) qui s'y raccorde ayant un deuxième diamètre (16) agrandi en comparaison du premier diamètre (15), dans la position de fermeture,
- le corps de soupape (10) s'appliquant contre la première section (13) et fermant la sortie de soupape (12), et
- l'élément d'étanchéité (19) s'appliquant contre la deuxième section (14), de telle sorte que l'élément d'étanchéité (19) ferme la sortie de soupape (12).

5. Procédé de fabrication d'une soupape (100) selon l'une quelconque des revendications précédentes, comprenant les étapes suivantes :
- la fixation d'un élément d'étanchéité (19) sur un corps de soupape (10) de la soupape (100), le corps de soupape (10) et l'élément d'étanchéité (19) étant configurés pour fermer ou libérer une sortie de soupape (12) de la soupape (100),
- la fixation du corps de soupape (10) avec l'élément d'étanchéité (19) sur un poussoir coulissant (4) de la soupape (100),
et
- l'insertion et le montage du poussoir coulissant (4) dans un boîtier (1) de la soupape (100), dans lequel boîtier (1) est agencé un siège de soupape (9) destiné à coopérer avec le corps de soupape (10) et l'élément d'étanchéité (19).
